# EUROPÄISCHE PATENTSCHRIFT

(11) **EP 1 091 332 B1**
(45) Veröffentlichungstag und Bekanntmachung des Hinweises auf die Patenterteilung: **01.03.2006**
(21) Anmeldenummer: 99119840.9
(22) Anmeldetag: 07.10.1999
(51) Int. Cl.: G08C 19/02

(54) **Leistungsstarkes doppeltes Zweileiter-Messanordnung und -Messgerät**
Powerful double two wire measuring arrangement and device
Système et Instrument de mesure performant à deux double conducteurs

(43) Veröffentlichungstag der Anmeldung: 11.04.2001
(60) Teilanmeldung: 05008469.8
(73) Patentinhaber: Endress + Hauser GmbH + Co. KG, 79689 Maulburg (DE)
(72) Erfinder: Lubcke, Wolfgang, 79585 Steinen (DE); Gerst, Peter, 79576 Weil am Rhein (DE); Capt, Jean-Gyl, 68440 Habsheim (FR)
(74) Vertreter: Andres, Angelika Maria

(56) Entgegenhaltungen:
- DE-A- 3 934 007
- DE-C- 4 426 765
- US-A- 5 416 723

## Beschreibung

Die Erfindung betrifft eine Meßanordnung mit mindestens einem Meßgerät und ein Meßgerät.

Bei in der Meß- und Regeltechnik üblichen Anwendungen, z.B. bei der Kontrolle, Steuerung und/oder Automatisierung komplexer Prozesse, sind üblicherweise mehrere Meßgeräte, z.B. Druck-, Temperatur-, Durchfluß- und/oder Füllstandsmeßgeräte, gleichzeitig im Einsatz.

Ein Meßgerät besteht in der Regel aus einem Meßaufnehmer, der eine physikalische Meßgröße erfaßt und in eine elektrische Größe umwandelt, und einer Elektronik, die die elektrische Größe in ein Meßsignal umwandelt. Die Meßgeräte müssen einzeln angeschlossen werden, d.h. sie müssen mit Energie versorgt werden und das Meßsignal muß einer übergeordneten Einheit zugeführt werden. Kernstück der übergeordneten Einheit ist üblicherweise eine Steuer-und/oder Regeleinheit, die die Meßsignale erfaßt, auswertet und in Abhängigkeit von den momentanen Meßwerten Anzeige-, Steuer- und/oder Regelsignale für die Kontrolle, Steuerung und/oder Automatisierung eines Prozesses liefert. Beispiele hierfür sind speicherprogrammierbare Steuerungen (SPS), Prozeßleitsysteme (PLS) oder Personalcomputer (PC).

Um den Arbeitsaufwand, der bei der Installation der Meßgeräte anfällt, gering zu halten werden in der Meß- und Regeltechnik bevorzugt Meßgeräte mit nur einem Leitungspaar eingesetzt, über das sowohl die Versorgung des Meßgeräts als auch die Signalübertragung erfolgt. Diese Geräte werden häufig als 2-Draht-Meßgeräte bezeichnet. Standardmäßig werden solche Meßgeräte mit 12 V gespeist und das Meßgerät steuert einen über das Leitungspaar fließenden Strom in Abhängigkeit von einem momentanen Meßwert. Das Meßsignal ist bei diesen Meßgeräten ein Signalstrom. Gemäß einem in der Meß- und Regeltechnik üblichen Standard wird der Signalstrom in Abhängigkeit von dem momentanen Meßwert auf Werte zwischen einem minimalen Signalstrom von 4 mA und einem maximalen Signalstrom von 20 mA eingestellt.

Da über das Leitungspaar sowohl die Versorgung als auch die Signalübertragung erfolgt steht dem Meßgerät bei einer Speisespannung von 12 V und einem Signalstrom von 4 mA nur eine Leistung von 48 mW zur Verfügung. Dies ist für eine große Vielzahl von Meßgeräten völlig ausreichend. In großen Anlagen sind daher üblicherweise Anschlußblocks vorgesehen, die eine Vielzahl identischer Anschlußpaare für den Anschluß dieser Leitungspaare an die übergeordnete Einheit aufweisen. Durch diese Standardisierung der Anschlußweise kann sehr einfach und schnell und damit kostengünstig eine große Anzahl von Meßgeräten angeschlossen werden. Da alle Leitungspaare und alle Anschlußpaare identisch sind, sind Verdrahtungsfehler praktisch ausgeschlossen.

Es gibt jedoch auch Meßgeräte, wie z.B. hochgenaue mit Mikrowellen arbeitende Füllstandsmeßgeräte, mit Ultraschall arbeitende Füllstandsmeßgeräte oder Durchflußmeßgeräte, für die diese geringe Leistung nicht ausreicht. Damit diese Meßgeräte trotzdem in Verbindung mit dem zuvor beschriebenen Standard einsetzbar sind, weisen diese Meßgeräte üblicherweise zwei Leitungspaare auf. Über eines der Leitungspaare wird das Meßgerät versorgt und über das andere fließt ein dem zuvor beschriebenen Standard entsprechender Signalstrom. Für die Versorgung ist es üblicherweise erforderlich an die normale Stromleitung, die z.B. 230 V Wechselspannung führt, einen Transformator und einen Gleichrichter anzuschließen, um z.B. eine Versorgungsspannung von üblicherweise 24 V Gleichspannung für das Meßgerät bereitzustellen. Dies ist sehr aufwendig und es besteht die Gefahr, daß die beiden Leitungspaare beim Anschluß des Geräts vertauscht werden können.

Beide oben genannten Ausführungen sind aus dem Dokument, "Temperaturmeßumformeraufgebaut in Hybrid-Modul-Technik" REGELUNGSTECHNISCHE PRAXIS HEFT 8, 1975, Seite 256-258, bekannt.

Es ist eine Aufgabe der Erfindung, ein Meßgerät anzugeben, das sehr einfach und fehlerfrei an eine übergeordnete Einheit elektrisch anschließbar ist.

Die Erfindung ist durch die unabhängigen Ansprüche 1 und 25 gekennzeichnet. Bevorzugte Ausführungsformen der Erfindung sind durch die übrigen Ansprüche gekennzeichnet.

Die Erfindung und weitere Vorteile werden nun anhand der Figuren der Zeichnung, in denen zwei Ausführungsbeispiele eines Meßgeräts und drei Ausführungsbeispiele einer Meßanordnung dargestellt sind, näher erläutert; gleiche Elemente sind in den Figuren mit denselben Bezugszeichen versehen.
- Fig. 1: zeigt ein Blockschaltild eines erfindungsgemäßen Meßgeräts mit zwei Leitungspaaren, die zwei separate Stromkreise versorgen;
- Fig. 2: zeigt ein Blockschaltbild eines Meßgerät, bei dem über das zweite Leitungspaar zugeführte Energie über einen Transformator mit mehreren Ausgängen auf mehrere Endverbraucher aufgeteilt ist;
- Fig. 3: zeigt eine Meßanordnung mit mindestens einem erfindungsgemäßen Meßgerät;
- Fig. 4: zeigt eine Meßanordnung, bei der die übergeordnete Einheit eine Steuer- und/oder Regeleinheit und eine entfernt davon angeordneten Batterie von Meßumformerspeisegeräten aufweist; und
- Fig. 5: zeigt eine Meßanordnung, die mehrere Batterien von Meßumformerspeiseeinheiten aufweist, die jeweils über ein Busanschaltung und eine Busleitung mit einer Steuer- und/oder Regeleinheit verbunden sind.

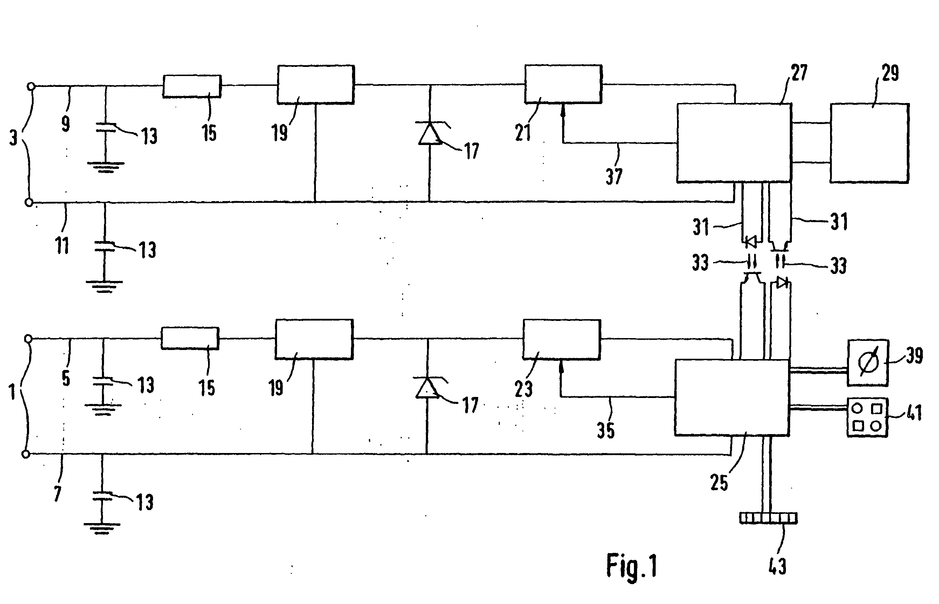

In Fig. 1 ist ein Blockschaltbild eines Meßgeräts dargestellt, daß an eine mindestens ein erstes und ein identisches zweites Anschlußpaar aufweisende übergeordnete Einheit anschließbar ist.

Hierzu weist das Meßgerät'ein mit dem ersten Anschlußpaar zu verbindendes erstes Leitungspaar 1 und ein mit dem zweiten Anschlußpaar zu verbindendes zweites Leitungspaar 3 auf.

Das erste und das zweite Leitungspaar 1, 3 weisen jeweils eine erste und eine zweite Leitung 5, 7, 9, 11 auf, von denen jede über einen Kondensator 13 geerdet ist. Die Kondensatoren 13 dienen dazu Störsignale herauszufiltern.

An jedes Leitungspaar 1, 3 ist eingangsseitig eine Strom-Spannungsbegrenzung angeschlossen. Eine solche Strom-Spannungsbegrenzung schützt das Meßgerät vor zu hohen Strömen und/oder Spannungen. Bei einer Begrenzung von Strom und Spannung auf Werte, bei denen eine Funkenbildung im Meßgerät sicher ausgeschlossen werden kann, ist der Einsatz des Meßgeräts in explosionsgefährdeten Bereichen möglich.

Bei dem in Fig. 1 dargestellten Ausführungsbeispiel erfolgt die Begrenzung des Stroms durch eine jeweils in der ersten Leitung 5, 9 eines Leitungspaares 1, 3 eingefügte Sicherung 15. Die Spannung ist durch eine zwischen die jeweilige erste und zweite Leitung 5, 9, 7, 11 des ersten und des zweiten Leitungspaares 1, 3 geschaltete Zener-Diode 17 begrenzt.

Zusätzlich zu den Zener-Dioden 17 kann jeweils eine Spannungsstabilisierung 19 vorgesehen sein. Diese ist z.B. wie in Fig. 1 gezeigt in die jeweilige erste Leitung 5, 9 eingefügt und zur Erfassung der aktuell anliegenden Spannung mit der jeweiligen zweiten Leitung 7, 11 verbunden.

Im Anschluß an die vorbeschriebene eingangsseitige Strom-Spannungsbegrenzung weist die erste Leitung 5, 9 jedes Leitungspaares 1, 3 jeweils eine steuerbare Stromquelle 21, 23 auf, die einen über das jeweilige Leitungspaar 1, 3 fließenden Strom in Abhängigkeit von einem Steuersignal auf einen bestimmten Wert einstellt.

An das erste Leitungspaar 1 ist eine Elektronik 25 angeschlossen. Das zweite Leitungspaar 3 versorgt eine Meßelektronik 27 und einen daran angeschlossenen Meßaufnehmer 29. Der Meßaufnehmer 29 erfaßt eine physikalische Meßgröße, z.B. einen Druck, einen Füllstand in einem Behälter oder eine Durchflußmenge durch ein Rohr und wandelt diese in eine elektrische Größe, z.B. eine Spannung, einen Strom, eine Widerstandsänderung, eine Kapazitätsänderung oder ein Signal, um. Die elektrische Größe wird mittels der Meßelektronik 27 erfaßt und einer weiteren Auswertung und/oder Verarbeitung zugänglich gemacht.

Die Meßelektronik 27 ist mit der Elektronik 25 in dem Ausführungsbeispiel von Fig. 1 durch Signalleitungen 31 verbunden, über die Informationen ausgetauscht werden können. Diese Verbindung ist in dem gezeigten Ausführungsbeispiel bidirektional und weist vorzugsweise eine galvanische Trennung 33 auf. In dem Ausführungsbeispiel von Fig. 1 ist die galvanische Trennung 33 durch zwei Optokoppler realisiert.

Der endgültige Meßwert wird z.B. von der Meßelektronik 27 bestimmt und an die Elektronik 25 übertragen. Genauso kann aber auch ein Rohsignal von der Meßelektronik 27 an die Elektronik 25 übermittelt werden, die dann aus dem Rohsignal den Meßwert bestimmt.

Die Elektronik 25 erzeugt im Betrieb ein Steuersignal, das von dem momentanen Meßwert abhängt und über eine Signalleitung 35 an der Stromquelle 23 anliegt. Das Steuersignal bewirkt, daß die Stromquelle 23 im Betrieb über das erste Leitungspaar 1 einen Signalstrom fließen läßt, der ein Maß für einen momentanen Meßwert ist.

Gemäß einem in der Meß- und Regeltechnik üblichen Standard variiert der Signalstrom in Abhängigkeit vom Meßwert zwischen einem minimalen Signalstrom von 4 mA und einem maximalen Signalstrom von 20 mA. Die erforderliche Leistung wird von der übergeordneten Einheit bereit gestellt. Ein Signalstrom von mehr als 20 mA oder weniger als 4 mA wird üblicherweise von der übergeordneten Einheit als Fehlfunktion erkannt und bewirkt die Auslösung eines Alarms und/oder die Einleitung einer prozeßspezifischen sicherheitsgerichteten Handlung.

Die Meßelektronik 27 erzeugt im Betrieb ebenfalls ein Steuersignal, das über eine Signalleitung 37 an der Stromquelle 21 anliegt. Dieses Steuersignal ist unabhängig vom momentanen Meßwert. Das Steuersignal bewirkt, daß die Stromquelle 21 im Betrieb über das zweite Leitungspaar 3 einen Versorgungsstrom fließen läßt.

Erfindungsgemäß ist das Steuersignal so ausgelegt, daß der Versorgungsstrom im normalen Betrieb immer einen Wert aufweist, der größer oder gleich dem minimalen Signalstrom und kleiner oder gleich dem maximalen Signalstrom ist. Dabei wird hier ebenfalls der in der Meß- und Regeltechnik übliche Standard von 4 mA bis 20 mA verwendet. Bei einem Meßgerät, das permanent viel Leistung benötigt wird der Versorgungstrom vorzugsweise immer gleich dem maximalen Signalstrom sein. Bei einem Meßgerät, das abhängig vom Meßvorgang z.B. nur in bestimmten Zeitintervallen eine hohe Leistung benötigt, ansonsten aber mit deutlich weniger Energie auskommt, empfiehlt es sich den Versorgungsstrom über das Steuersignal gemäß aktuellen Energiebedarf zu variieren.

Das Meßgerät kann je nach Bedarf eine Vorortanzeige 39, ein Bedienfeld 41 und/oder eine Programmierschnittstelle 43 aufweisen. Die Vorortanzeige 39 dient z.B. zur Anzeige des aktuellen Meßwerts oder aber in Verbindung mit dem Bedienfeld 41 zur Anzeige der über das Bedienfeld 41 eingegebenen Daten. Über das Bedienfeld 41 kann z.B. eine Parametrierung, ein Abgleich und/oder eine Einstellung eines Meßbereichs des Meßgeräts am Einsatzort erfolgen. Über die Programmierschnittstelle 43 kann z.B. ein Handbediengerät angeschlossen werden.

Anzeige 39, Bedienfeld 41 und/oder Programmierschnittstelle 43 sind, wie in Fig. 1 dargestellt, an die Elektronik 25 anschließbar und werden über die Elektronik 25 über das erste Leitungspaar 1 versorgt.

Sowohl die Meßelektronik 27 als auch die Elektronik 25 können Spannungsregler enthalten, die eine über die übergeordnete Einheit an dem ersten und dem zweiten Leitungspaar 1, 3 anliegende Spannung auf Werte transformiert, die den Bedürfnissen der Elektronik 25, der Meßelektronik 27, des Meßaufnehmers 29, der Anzeige 39, des Bedienfelds 41 und der Programmierschnittstelle 43 angepaßt sind.

Weiterhin wird bei der Auslegung des Meßgeräts so vorgegangen, daß die Funktionsblöcke des Meßgeräts in analoge und digitale Funktionsblöcke aufgeteilt sind. Die analogen Funktionsblöcke werden vorzugsweise in die Meßelektronik 27 und die digitalen Funktionsblöcke werden vorzugsweise in die Elektronik 25 integriert. Dies bietet den Vorteil, daß man mit sehr wenigen Spannungsreglern auskommt. Die digitalen Funktionsblöcke weisen in der Regel einen deutlich geringeren Energiebedarf als die analogen Funktionsblöcke und der Meßaufnehmer 29 auf. Bei der vorbeschriebenen Aufteilung werden folglich die Funktionsblöcke mit dem niedrigeren Energiebedarf über das erste Leitungspaar 1 mit dem Signalstrom versorgt. Die Funktionsblöcke mit dem höheren Energiebedarf werden über das zweite Leitungspaar 3 mit dem Versorgungsstrom versorgt. Für die Versorgung des Meßgeräts steht somit der Versorgungsstrom und mindestens ein Anteil des Signalstromes zur Verfügung.

Das erste Leitungspaar 1 ist mit einem ersten Stromkreis verbunden, der die Elektronik 25 enthält. Das zweite Leitungspaar 3 ist mit einem zweiten Stromkreis verbunden, der die Meßelektronik 27 und den Meßaufnehmer 29 enthält. Die beiden Stromkreise sind voneinander getrennt und lediglich über die Signalleitungen 31 verbunden. Da die Signalleitungen 31 eine galvanische Trennung 33 aufweisen, sind auch die beiden Stromkreise galvanisch voneinander getrennt.

Aus der Sicht der übergeordneten Einheit sind die beiden Leitungspaare 1, 3 hinsichtlich deren Energieversorgung identisch. Für die übergeordnete Einheit verhält sich das Meßgerät elektrisch genau so als ob zwei 2-Draht-Meßgeräte angeschlossen wären. Beide 2-Draht-Meßgerätegenügen dem vorgenannten in der Meß- und Regeltechnik üblichen Standard bei dem der Signalstrom Werte von 4 mA bis 20 mA annimmt.

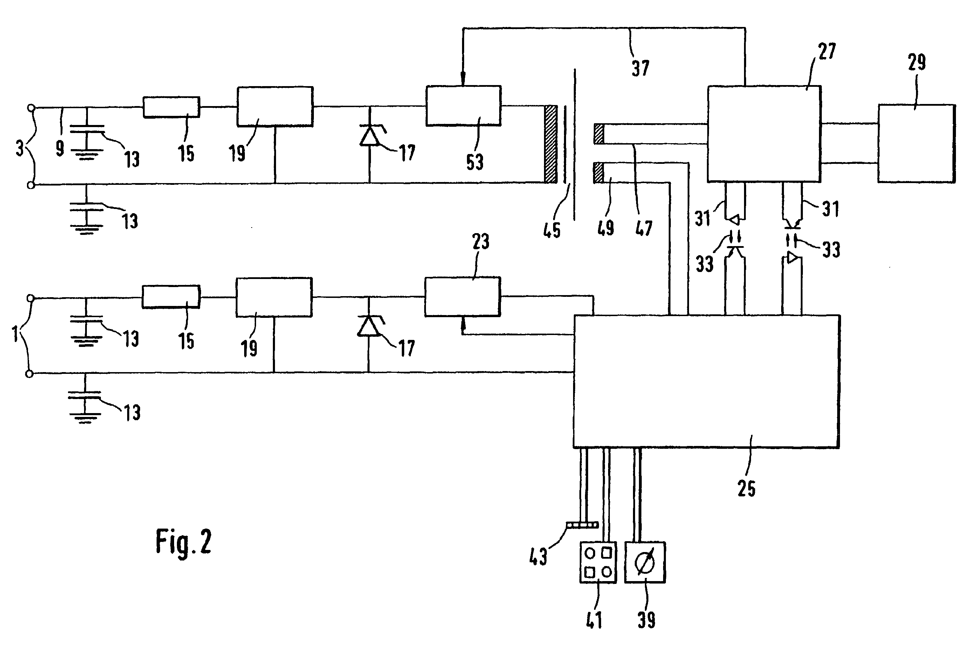

Fig. 2 zeigt ein weiteres Ausführungsbeispiel eines erfindungsgemäßen Meßgeräts. Aufgrund der relativ weitgehenden Übereinstimmung werden nachfolgend lediglich die Unterschiede zu dem in Fig. 1 dargestellten Ausführungsbeispiel näher beschrieben.

Der wesentlich Unterschied besteht in der Aufteilung der vom Meßgerät aufgenommenen Leistung.

Es ist in dem zweiten Stromkreis ein Übertrager 45 vorgesehen, der primärseitig über das zweite Leitungspaar 3 gespeist wird und sekundärseitig zwei Ausgänge 47, 49 aufweist. Über den ersten Ausgang 47 werden die Meßelektronik 27 und der Meßaufnehmer 29 versorgt. Der zweite Ausgang 49 ist mit der Elektronik 25 verbunden. Die Elektronik 25 wird also zum einen, genau wie bei dem in Fig. 1 dargestellten Ausführungsbeispiel, über den im ersten Leitungspaar 1 fließenden Signalstrom versorgt, zusätzlich bezieht sie jedoch auch über den zweiten Ausgang 49 des Übertragers 45 Energie, die dem Meßgerät über das zweite Leitungspaar 3 zugeführt ist.

Die Meßelektronik 27 liefert auch bei dem in Fig. 2 gezeigten Ausführungsbeispiel ein Steuersignal, das zur Einstellung des im Primärkreis über das zweite Leitungspaar 3 fließenden Versorgungsstroms dient. Das Steuersignal liegt über die Signalleitung 37 an einer im Primärkreis angeordneten Regeleinheit 53 an, die den Versorgungsstrom entsprechend einstellt.

Erfindungsgemäß ist auch hier das Steuersignal so ausgelegt, daß der Versorgungsstrom im normalen Betrieb immer einen Wert aufweist, der größer oder gleich dem minimalen Signalstrom und kleiner oder gleich dem maximalen Signalstrom ist.

Durch den Übertrager 45 ist auch bei diesem Ausführungsbeispiel eine galvanische Trennung zwischen den beiden Stromkreisen gewährleistet.

Auf völlig analoge Weise kann natürlich auch ein Teil der über den Signalstrom zur Verfügung stehenden Leistung galvanisch getrennt der Meßelektronik 27 und/oder dem Meßaufnehmer 29 zugeführt werden, indem ein Übertrager in den ersten Stromkreis plaziert wird, der über einen Ausgang mit der Elektronik 25 und über einen weiteren Ausgang mit der Meßelektronik 27 und/oder dem Meßaufnehmer 29 verbunden ist.

Aus der Sicht der übergeordneten Einheit sind die beiden Leitungspaare 1, 3 auch bei diesem Ausführungsbeispiel hinsichtlich deren Energieversorgung identisch. Für die übergeordnete Einheit verhält sich das Meßgerät elektrisch genau so als ob zwei 2-Draht-Meßgeräte angeschlossen wären. Beide 2-Draht-Meßgerätegenügen dem vorgenannten in der Meß-und Regeltechnik üblichen Standard bei dem der Signalstrom Werte von 4 mA bis 20 mA annimmt.

Ein besonderer Vorteil.ist, daß die erfindungsgemäßen Meßgeräte nicht über eine Netzspannung versorgt werden müssen. Dadurch treten bei erfindungsgemäßen Meßgeräten nur die geringen Signal- und Versorgungsströme auf. Dies erhöht die Sicherheit, insb. in Anlagen oder Einsatzörten, wo z.B. Explosionsgefahr besteht deutlich.

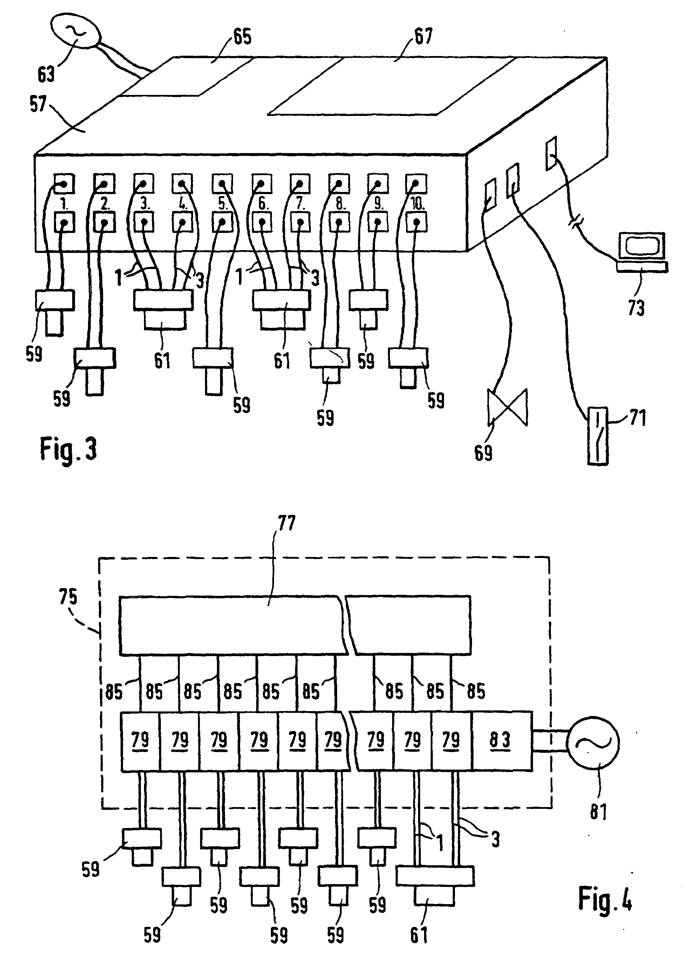

Die Figuren 3 bis 5 zeigen drei verschiedene Meßanordnung mit erfindungsgemäßen Meßgeräten.

In Fig. 3 ist eine Meßanordnung mit einer übergeordneten Einheit 57 dargestellt, an die sechs konventionelle 2-Draht-Meßgeräte 59 und zwei erfindungsgemäße Meßgeräte 61 angeschlossen sind.

Die übergeordnete Einheit 57 ist z.B. eine speicherprogrammierbare Steuerung oder ein Prozeßleitsystem. Sie weist in dem gezeigten Ausführungsbeispiel der Übersicht halber lediglich 10 identische mit 1. bis 10. durchnumerierte Anschlußpaare auf. Jedes Anschlußpaar ist standardmäßig für den Anschluß, die Versorgung und die Übermittlung eines Meßwerts in Form eines Signalstromes eines 2-Draht-Meßgeräts ausgelegt.

Die übergeordnete Einheit 57 weist ein mit einer Spannungsquelle 63 verbundenes Netzteil 65 auf, über das die einzelnen Anschlußpaare 1. bis 10. versorgt sind. Jedem Anschlußpaar 1. bis 10. ist eine Aufnahmeeinheit zugeordnet, die einen über Anschlußpaar 1. bis 10. fließenden Strom erfaßt und ein dem Strom entsprechendes Signal erzeugt und einem intelligenten Kern 67 der übergeordneten Einheit 57, z.B. einem Mikroprozessor, zuführt. In dem intelligenten Kern 67 werden alle eingehenden Meßwerte überwacht und gemäß einem in dem intelligenten Kern 67 gespeicherten Ablaufplan in Abhängigkeit von den momentanen Meßwerten Anzeige-, Steuer-, Regel- oder Schaltvorgänge ausgelöst. Dies ist in Fig. 3 symbolisch dargestellt durch einen ersten Ausgang über den die übergeordnete Einheit 57 ein Ventil 69, einen zweiten Ausgang, über den die übergeordnete Einheit 57 einen Schalter 71 und einen dritten Ausgang, über den die übergeordnete Einheit 57 eine Anzeige 73 ansteuert. Als Anzeige kann selbstverständlich auch ein Personalcomputer dienen, der nicht nur einen Meßwert anzeigt, sondern z.B. auch einen Prozeßablauf einer ganzen Anlage visualisieren kann.

Bei dem dargestellten Ausführungsbeispiele sind an das 1., das 2., das 5., das 8., das 9. und das 10. Anschlußpaar konventionelle 2-Drahtmeßgeräte 59 angeschlossen. Der jeweils über eines dieser Anschlußpaare 1., 2., 5., 8., 9., 10. fließende Strom entspricht einem Meßwert des jeweiligen konventionellen 2-Draht-Meßgeräts 59.

An die beiden Anschlußpaare 3. und 4. ist ein erfindungsgemäßes Meßgerät 61 angeschlossen, indem das erste Leitungspaar 1 mit dem 3. Anschlußpaar und das zweite Leitungspaar 3 mit dem 4. Anschlußpaar verbunden ist. An die Anschlußpaare 6. und 7. ist ein weiteres erfindungsgemäßes Meßgerät 61 angeschlossen, indem dessen erstes Leitungspaar 1 mit dem 6. Anschlußpaar und dessen zweites Leitungspaar 3 mit dem 7. Anschlußpaar verbunden ist.

Hinsichtlich des elektrischen Anschlusses unterscheiden sich die erfindungsgemäßen Meßgerät 61 in keiner Weise von den konventionellen 2-Draht-Meßgeräten 59. Es wird bei allen Geräten jeweils ein Leitungspaar mit einem Anschlußpaar verbunden. Im Ablaufdiagramm im intelligenten Kern 67 der übergeordneten Einheit 57 ist festgelegt, welchem Anschlußpaar 1. bis 10. welche Bedeutung zukommt. Dort ist z.B. abgelegt, das der über das erste Anschlußpaar 1. erhaltene Meßwert ein Füllstand in einem bestimmten Behälter ist. Im Ablaufdiagramm kann z.B. weiter festgeschrieben sein, daß bei Erreichen eines bestimmten Füllstandes ein über einen Ausgang der übergeordneten Einheit 57 ansprechbares Ablaßventil dieses Behälters zu öffnen ist.

Ein Unterschied zwischen den konventionellen 2-Draht-Meßgeräten 59 und den erfindungsgemäßen Meßgeräten 61 besteht darin, daß der über die jeweiligen ersten Leitungspaare 1 fließende Strom ein Signalstrom ist, der einen Meßwert darstellt, der von der übergeordneten Einheit 57 erfaßt und verwendet wird. Der über das jeweilige zweite Leitungspaar 3 fließende Versorgungsstrom wird entweder von der übergeordneten Einheit 57 vollständig ignoriert, z.B. indem der in dem Ablaufdiagramm gar nicht auftaucht, oder aber es kann ihm eine Alarmfunktion oder ähnliches zugewiesen sein. Eine Alarmfunktion könnte z.B. so gestaltet sein, daß die übergeordnete Einheit 57 einen Alarm auslöst bzw. eine Fehlfunktion meldet, wenn der Versorgungsstrom größer als der maximale Signalstrom oder kleiner als der minimale Signalstrom ist. Zusätzlich kann im Ablaufdiagramm eine sicherheitsgerichtete Abfolge von Aktionen für den Fall einer Fehlfunktion des Meßgeräts vorgesehen sein.

Fig. 4 zeigt ein weiteres Ausführungsbeispiel einer Meßanordnung mit mindestens einem erfindungsgemäßen Meßgerät 61. Der wesentliche Unterschied zu der in Fig. 3 dargestellten Meßanordnung besteht darin, daß die übergeordnete Einheit 75 von Fig. 4 aus einer Steuer-und/oder Regeleinheit 77, z.B. einer speicherprogrammierbare Steuerung (SPS) oder einem Prozeßleitsystem (PLS), und einer räumlich getrennt davon angeordneten Batterie von in Reihe geschalteten Meßumformerspeiseeinheiten 79 besteht. Die Batterie wird über ein mit einer Spannungsquelle 81 verbundenes Netzteil 83 versorgt. Jede Meßumformerspeiseeinheit 79 weist ein Anschlußpaar für ein 2-Draht-Meßgerät auf. Damit ein erfindungsgemäßes Meßgerät anschließbar ist muß die Batterie mindestens zwei Meßumformerspeiseeinheiten 79 aufweisen. Üblicherweise weisen solche Batterien jedoch deutlich mehr als zwei, z.B. 10 oder 64 Meßumformerspeiseeinheiten auf.

Jede Meßumformerspeiseeinheit 79 ist über deren Anschlußpaar mit einem Meßgerät verbindbar, sie speist das Meßgerät, erfaßt einen über das mit ihrem Anschluapaar verbundenen Leitungspaar fließenden Strom und führt über eine Signalleitung 85 ein dem Strom entsprechendes Signal an die Steuer- und/oder Regeleinheit 77 ab. Auch bei diesem Ausführungsbeispiel ist also eine Anzahl identischer Anschlußpaare vorgesehen und für den Anschluß von herkömmlichen 2-Draht-Meßgeräten 59 und erfindungsgemäßen Meßgeräten 61 gilt das zuvor in Verbindung mit dem in Fig. 3 dargestellten Ausführungsbeispiel gesagte.

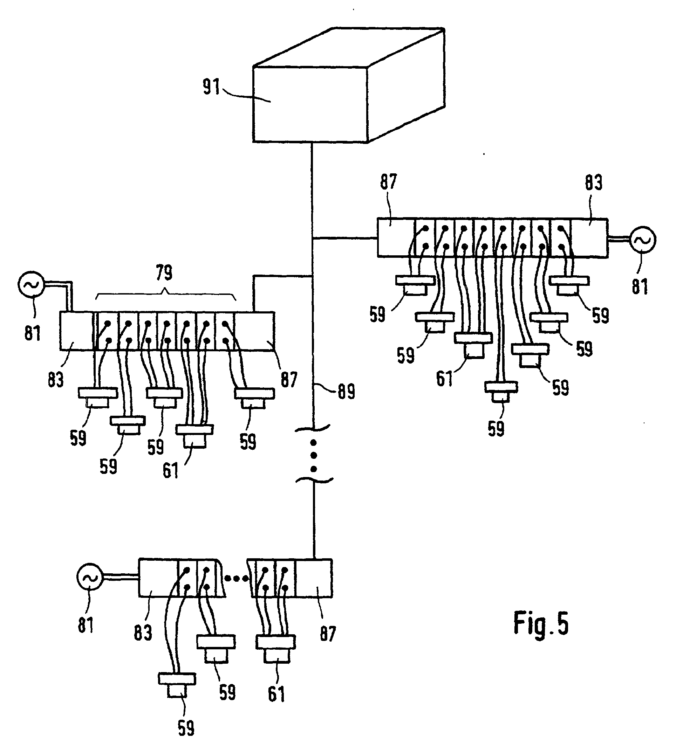

Fig. 5 zeigt ein weiteres Ausführungsbeispiel einer Meßanordnung. Die Meßanordnung weist mehrere Batterien von Meßumformspeiseeinheiten 79 auf, die jeweils über ein mit einer Spannungsquelle 81 verbundenes Netzteil 83 gespeist sind. Genau wie bei dem in Fig. 4 dargestellten Ausführungsbeispiel weist auch hier jede Meßumformerspeiseeinheit 79 ein Anschlußpaar auf und es sind sowohl herkömmliche 2-Draht-Meßgeräte 59 als auch erfindungsgemäße Meßgeräte 61 an die Meßumformerspeiseeinheiten 79 angeschlossen.

Jede Batterie von Meßumformerspeiseeinheiten ist zur Übertragung der Meßwerte der daran angeschlossenen Meßgeräte 59, 61 über eine Busanschaltung 87 und eine Busleitung 89 mit einer Steuer- und/oder Regeleinheit 91, z.B. einer speicherprogrammierbaren Steuerung (SPS), einem Prozeßleitsystem (PLS) oder einem Personalcomputer (PC) verbunden.

Alle drei Meßanordnungen bringen die Vorteile der erfindungsgemäßen Meßgeräte 61 deutlich hervor. So können diese Geräte, obwohl sie mehr Energie benötigen als die 2-Draht-Meßgeräte 59, bei denen ja wie zuvor beschrieben die Versorgung und die Meßwertübertragung über ein und dasselbe Leitungspaar erfolgt und deshalb nur eine begrenzte Leistung zur Verfügung steht, ohne weiteres in einer Meßanordnung eingesetzt werden, die an sich ausschließlich für 2-Draht-Meßgeräte ausgelegt ist. Zusätzliche Versorgungsanschlüsse, wie sie herkömmliche Meßgeräte mit einem höheren Energiebedarf aufweisen, sind aufgrund der erfindungsgemäßen Ausbildung der Meßgeräte 61 nicht mehr erforderlich. Die erfindungsgemäßen Meßgeräte 61 werden zusammen mit den 2-Draht-Meßgeräten und auf identische Art und Weise an die übergeordnete Einheit angeschlossen. Ein zusätzlicher Arbeitsgangs ist nicht erforderlich und Fehler aufgrund von Vertauschungen der Anschlüsse dieser Geräte sind ausgeschlossen.

## Patentansprüche

1. Meßanordnung, die ein Meßgerät (61) sowie eine mit diesem verbundene übergeordnete Einheit (57, 75) umfaßt, wobei Meßgerät (61) und übergeordnete Einheit (57, 75) über ein erstes Leitungspaar (1) sowie über ein zweites Leitungspaar (3) miteinander elektrisch verbunden sind, und wobei die Meßanordnung so ausgelegt ist, daß im Betrieb über das erste Leitungspaar (1) ein Signalstrom fließt, der ein Maß für einen vom Meßgerät (61) erzeugten Meßwert ist, und über das zweite Leitungspaar (3) ein Versorgungsstrom fließt, wobei der Versorgungsstrom und mindestens ein Anteil des Signalstromes für die Versorgung des Meßgeräts (61) zur Verfügung steht und wobei ein Wert des Versorgungsstrom im normalen Betrieb größer oder gleich einem minimalen Signalstrom ist und kleiner oder gleich einem maximalen Signalstrom ist.

2. Meßanordnung nach Anspruch 1, **dadurch gekennzeichnet, daß** in der übergeordneten Einheit (57, 75) mindestens zwei für die Versorgung von 2-Draht-Meßgeräten geeignete Meßumformerspeiseeinheiten (79) vorgesehen sind und daß jedes der beiden Leitungspaare (1, 3) mit jeweils einer der beiden Meßumformerspelseeinheiten (79) elektrisch verbunden ist.

3. Meßanordnung nach Anspruch 1, **dadurch gekennzeichnet, daß** in der übergeordneten Einheit (57, 75) mindestens zwei für die Versorgung von 2-Draht-Meßgeräten geeignete Meßumformerspeiseeinheiten (79) vorgesehen sind und daß jede der beiden Meßumformerspeiseeinheiten (79) mit jeweils einem der beiden Leitungspaare (1, 3) elektrisch verbunden ist.

4. Meßanordnung nach einem der vorherigen Ansprüche, **dadurch gekennzeichnet, daß** das Meßgerät einen Meßaufnehmer (29) zum Erfassen einer physikalischen Meßgröße, insb. eines Drucks, eines Füllstands in einem Behälter oder einer Durchflußmenge durch ein Rohr, umfaßt.

5. Meßanordnung nach dem vorherigen Anspruch, **dadurch gekennzeichnet, daß** der Meßaufnehmer (29) mit dem im zweiten Leitungspaar (3) fließenden Versorgungsstrom versorgt ist.

6. Meßanordnung nach einem der vorherigen Ansprüche, **dadurch gekennzeichnet, daß** im Meßgerät (61) für jedes der beiden Leitungspaare (1, 3) jeweils eine Strom-Spannungsbegrenzung (15, 17) vorgesehen ist.

7. Meßanordnung nach einem der vorherigen Ansprüche, **dadurch gekennzeichnet, daß** an jedes Leitungspaar (1, 3) eingangsseitig eine Strom-Spannungsbegrenzung (15, 17) angeschlossen ist.

8. Meßanordnung nach einem der vorherigen Ansprüche, **dadurch gekennzeichnet, daß** die beiden Leitungspaare (1,3) voneinander galvanisch getrennt sind.

9. Meßanordnung nach dem vorherigen Anspruch, **dadurch gekennzeichnet, daß** die beiden Leitungspaare (1, 3) innerhalb des Meßgeräts (61) voneinander galvanisch getrennt sind.

10. Meßanordnung nach einem der vorherigen Ansprüche, **dadurch gekennzeichnet, daß** zur galvanischen Trennung der beiden Leitungspaare (1, 3) im Meßgerät (61) ein Übertrager (45) vorgesehen ist.

11. Meßanordnung nach einem der Ansprüche 1 bis 9, **dadurch gekennzeichnet, daß** zur galvanischen Trennung der beiden Leitungspaare (1, 3) im Meßgerät (61) Optokoppler vorgesehen sind.

12. Meßanordnung nach einem der vorherigen Ansprüche, **dadurch gekennzeichnet, daß** der Signalstrom in Abhängigkeit vom Meßwert zwischen einem 4 mA und 20 mA variiert.

13. Meßanordnung nach Anspruch 12, **dadurch gekennzeichnet, daß** ein Signalstrom, der kleiner ist als der minimale Signalstrom eine Fehlfunktion in der Meßanordnung signalisiert.

14. Meßanordnung nach Anspruch 12, **dadurch gekennzeichnet, daß** ein Signalstrom, der größer ist als der maximale Signalstrom eine Fehlfunktion in der Meßanordnung signalisiert.

15. Meßanordnung nach einem der vorherigen Ansprüche, **dadurch gekennzeichnet, daß** der Versorgungsstrom in Abhängigkeit von einem aktuellen Energiebedarf des Meßgeräts (61) variiert.

16. Meßanordnung nach dem vorherigen Anspruch, **dadurch gekennzeichnet, daß** der Versorgungsstrom in Abhängigkeit vom Energiebedarf des Meßgeräts (61) zwischen einem minimalen Versorgungsstrom und einem maximalen Versorgungsstrom variiert.

17. Meßanordnung nach Anspruch 16, **dadurch gekennzeichnet, daß** ein Versorgungsstrom, der kleiner ist als der minimale Versorgungsstrom eine Fehlfunktion in der Meßanordnung signalisiert.

18. Meßanordnung nach Anspruch 16, **dadurch gekennzeichnet, daß** ein Versorgungsstrom, der größer ist als der maximale Versorgungsstrom eine Fehlfunktion in der Meßanordnung signalisiert.

19. Meßanordnung nach einem der vorherigen Ansprüche, **dadurch gekennzeichnet, daß** die übergeordnete Einheit (57, 75) eine Steuer- und/oder Regeleinheit (67, 77, 91), insb. eine speicherprogrammierbare Steuerung (SPS) und/oder einen Personalcomputer (PC), umfasst.

20. Meßanordnung nach einem der vorherigen Ansprüche, **dadurch gekennzeichnet, daß** in der übergeordneten Einheit (57, 75) eine Busleitung (89) zur Übertragung der vom Meßgerät (61) erzeugten Meßwerte vorgesehen ist.

21. Meßanordnung nach dem vorherigen Anspruch, **dadurch gekennzeichnet, daß** in der übergeordneten Einheit (57, 75) eine Busanschaltung (87) zum Verbinden des Meßgeräts (61) mit der Busleitung (89) vorgesehen ist.

22. Meßanordnung nach einem der vorherigen Ansprüche, **dadurch gekennzeichnet, daß** das Meßgerät (61) eine, insb. zur Anzeige eines aktuellen Meßwerts geeignete, Vorortanzeige (39) aufweist.

23. Meßanordnung nach einem der vorherigen Ansprüche, **dadurch gekennzeichnet, daß** das Meßgerät (61) ein, insb. zur Eingabe von Daten geeignetes, Bedienfeld (41) aufweist.

24. Meßanordnung nach einem der vorherigen Ansprüche, **dadurch gekennzeichnet, daß** das Meßgerät (61) eine, insb. zum Anschließen eines Handbediengeräts geeignete, Programmierschnittstelle (43) aufweist.

25. Meßgerät (61) zum Anschluß an eine übergeordnete Einheit (57, 75) über mindestens ein erstes und ein zweites Leitungspaar (1, 3), wobei das Meßgerät (61) so ausgelegt ist, daß es über das erste Leitungspaar (1) einen Signalstrom fließen läßt, der einen vom Meßgerät (61) erzeugten Meßwert repräsentiert, und über das zweite Leitungspaar (3) mit einem Versorgungsstrom versorgt wird, wobei der Versorgungsstrom und mindestens ein Anteil des Signalstromes für die Versorgung des Meßgeräts (61) zur Verfügung steht und wobei ein Wert des Versorgungsstrom im normalen Betrieb größer oder gleich einem minimalen Signalstrom ist und kleiner oder gleich einem maximalen Signalstrom ist.

26. Meßgerät (61) nach Anspruch 25, **dadurch gekennzeichnet, daß** das Meßgerät einen Meßaufnehmer (29) zum Erfassen einer physikalischen Meßgröße, insb. eines Drucks, eines Füllstands in einem Behälter oder einer Durchflußmenge durch ein Rohr, umfaßt.

27. Meßgerät (61) nach dem vorherigen Anspruch, **dadurch gekennzeichnet, daß** der Meßaufnehmer (29) mit dem im zweiten Leitungspaar (3) fließenden Versorgungsstrom versorgt ist.

28. Meßgerät (61) nach einem der Ansprüche 25 bis 27, **dadurch gekennzeichnet, daß** für jedes der beiden Leitungspaare (1, 3) jeweils eine Strom-Spannungsbegrenzung (15, 17) vorgesehen ist.

29. Meßgerät (61) nach einem der Ansprüche 25 bis 27, **dadurch gekennzeichnet, daß** an jedes Leitungspaar (1, 3) eingangsseitig eine Strom-Spannungsbegrenzung (15, 17) angeschlossen ist.

30. Meßgerät (61) nach einem der Ansprüche 25 bis 29, **dadurch gekennzeichnet, daß** die beiden Leitungspaare (1, 3) voneinander galvanisch getrennt sind.

31. Meßgerät (61) nach einem der Ansprüche 25 bis 29, **dadurch gekennzeichnet, daß** zur galvanischen Trennung der beiden Leitungspaare (1, 3) ein Übertrager (45) vorgesehen ist.

32. Meßgerät (61) nach einem der Ansprüche 25 bis 29, **dadurch gekennzeichnet, daß** zur galvanischen Trennung der beiden Leitungspaare (1, 3) Optokoppler vorgesehen sind.

33. Meßgerät (61) nach einem der Ansprüche 25 bis 32, **dadurch gekennzeichnet, daß** der Signalstrom in Abhängigkeit vom Meßwert zwischen einem minimalen Signalstrom und einem maximalen Signalstrom variiert.

34. Meßgerät (61) nach einem der Ansprüche 25 bis 33, **dadurch gekennzeichnet, daß** der Versorgungsstrom in Abhängigkeit von einem aktuellen Energiebedarf des Meßgeräts (61) variiert.

35. Meßanordnung nach dem vorherigen Anspruch, **dadurch gekennzeichnet, daß** der Versorgungsstrom in Abhängigkeit vom Energiebedarf des Meßgeräts (61) zwischen einem minimalen Versorgungsstrom und einem maximalen Versorgungsstrom variiert.

36. Meßgerät (61) nach einem der Ansprüche 25 bis 35, **dadurch gekennZeichnet, daß** das Meßgerät (61) eine, insb. zur Anzeige eines aktuellen Meßwerts geeignete, Vorortanzeige (39) aufweist.

37. Meßgerät (61) nach einem der Ansprüche 25 bis 36, **dadurch gekennzeichnet, daß** das Meßgerät (61) ein, insb. zur Eingabe von Daten geeignetes, Bedienfeld (41) aufweist.

38. Meßgerät (61) nach einem der Ansprüche 25 bis. 37, **dadurch gekennzeichnet, daß** das Meßgerät (61) eine, insb. zum Anschließen eines Handbediengeräts geeignete, Progammierschnittstelle (43) aufweist.

## Revendications

1. Dispositif de mesure comprenant un appareil de mesure (61) ainsi qu'une unité maîtresse (57, 75) reliée audit appareil de mesure; l'appareil de mesure (61) et l'unité maîtresse (57, 75) étant reliés électriquement ensemble via une première paire de conducteurs (1) ainsi que via une deuxième paire de conducteurs (3), et où la disposition de mesure est dimensionnée pour que, lors d'un fonctionnement via une première paire de conducteurs (1), un courant de signal circule , lequel courant de signal est une mesure pour une valeur de mesure produite par l'appareil de mesure (61), et pour qu'un courant d'alimentation circule via la deuxième paire de conducteurs (3) ; le courant d'alimentation et au moins une partie du courant de signal sont à disposition pour l'alimentation de l'appareil de mesure (61) et où une valeur du courant d'alimentation est supérieure ou égale à un courant de signal minimal lors d'un fonctionnement normal et inférieur et égal à un courant de signal maximal.

2. Disposition de mesure selon la revendication 1, **caractérisé en ce que** dans l'unité maîtresse (57, 75), on a prévu au moins deux unités d'alimentation de transformation de mesure (79) appropriées pour l'alimentation d'appareils de mesure à 2 fils et **en ce que** chacune des deux paires de conducteurs (1,3) est reliée à chaque fois électriquement avec une des deux unités d'alimentation de transformation de mesure (79).

3. Disposition de mesure selon la revendication 1, **caractérisée en ce que** dans l'unité maîtresse (57, 75) on a prévu au moins deux unités d'alimentation de transformation de mesure (79) appropriées pour l'alimentation de deux appareils de mesure à 2 fils et **en ce que** chacune des deux unités d'alimentation de transformation de mesure (79) est reliée à chaque fois électriquement avec une des deux paires de conducteurs (1,3).

4. Disposition de mesure selon une des revendications précédentes, **caractérisée en ce que** l'appareil de mesure comprend un capteur de mesure (29) pour la détection d'une grandeur de mesure physique, notamment d'une pression, d'un niveau de remplissage dans un récipient ou une quantité de flux via un tube.

5. Disposition de mesure selon la revendication précédente, **caractérisée en ce que** le capteur de mesure (29) est alimenté par le courant d'alimentation circulant dans la deuxième paire de conducteurs (3).

6. Disposition de mesure selon une des revendications précédentes, **caractérisée en ce qu'**on a prévu à chaque fois une limitation de tension de courant (15, 17) dans l'appareil de mesure (61) pour chacune des deux paires de conducteurs (1,3).

7. Disposition de mesure selon une des revendications précédentes, **caractérisée en ce qu'**une limitation de tension de courant (15, 17) est connectée du côté de l'entrée à chaque paire de conducteurs (1,3).

8. Disposition de mesure selon une des revendications précédentes, **caractérisée en ce que** les deux paires de conducteurs (1,3) sont séparées de façon galvanique.

9. Disposition de mesure selon une des revendications précédentes, **caractérisée en ce que** les deux paires de conducteurs (1,3) sont séparées l'une de l'autre de façon galvanique à l'intérieur de l'appareil de mesure (61).

10. Disposition de mesure selon une des revendications précédentes, **caractérisée en ce qu'**on a prévu un transmetteur (45) pour réaliser la séparation galvanique des deux paires de conducteurs (1,3) dans l'appareil de mesure (61).

11. Disposition de mesure selon une des revendications 1 à 9, **caractérisée en ce qu'**on a prévu un optocoupleur pour réaliser la séparation galvanique des deux paires de conducteurs (1,3) dans l'appareil de mesure (61).

12. Disposition de mesure selon une des revendications précédentes, **caractérisée en ce que** le courant de signal varie selon la valeur de mesure, entre 4 mA et 20 mA.

13. Disposition de mesure selon une des revendications précédentes, **caractérisée en ce qu'**un courant de signal qui est inférieur au courant de signal minimal, signale une fonction défectueuse dans la disposition de mesure.

14. Disposition de mesure selon la revendication 12, **caractérisée en ce qu'**un courant de signal qui est supérieur au courant de signal maximal signalise une fonction défectueuse dans la disposition de mesure.

15. Disposition de mesure selon une des revendications précédentes, **caractérisée en ce que** le courant d'alimentation varie en fonction le besoin en énergie actuel de l'appareil de mesure (61).

16. Disposition de mesure selon une des revendications précédentes, **caractérisée en ce que** le courant d'alimentation varie en fonction du besoin en énergie de l'appareil de mesure (61) entre un courant d'alimentation minimal et un courant d'alimentation maximal.

17. Disposition de mesure selon la revendication 16, **caractérisée en ce qu'**un courant d'alimentation qui est inférieur au courant d'alimentation minimal signalise une fonction défectueuse dans la disposition de mesure.

18. Disposition de mesure selon la revendication 16, **caractérisée en ce qu'**un courant d'alimentation qui est supérieur au courant d'alimentation maximal signale une fonction défectueuse dans la disposition de mesure.

19. Disposition de mesure selon une des revendications précédentes, **caractérisée en ce que** l'unité maîtresse (57, 75) comprend une unité de commande et/ou de réglage (67, 77, 91), notamment une commande par programmes enregistrés (SPS) et/ou un ordinateur personnel (PC).

20. Disposition de mesure selon une des revendications précédentes, **caractérisée en ce qu'**on a prévu dans l'unité supérieur (57, 75), une connexion de bus (89) pour la transmission des valeurs de mesure produites par l'appareil de mesure (61).

21. Disposition de mesure selon une des revendications précédentes, **caractérisée en ce qu'**on a prévu dans l'unité maîtresse (57, 75), une connexion de bus (87) pour relier l'appareil de mesure (61) avec le conducteur de bus (89).

22. Disposition de mesure selon une des revendications précédentes, **caractérisée en ce que** l'appareil de mesure (61) présente un afficheur sur place (39) adapté, notamment pour afficher une valeur de mesure actuelle.

23. Disposition de mesure selon une des revendications précédentes, **caractérisée en ce que** l'appareil de mesure (61) présente un champ de commande (41) adapté, notamment pour l'introduction de données.

24. Disposition de mesure selon une des revendications précédentes, **caractérisée en ce que** l'appareil de mesure (61) présente une interface de programmation (43) appropriée, notamment pour la connexion d'un appareil commandé manuellement.

25. Appareil de mesure (61) pour la connexion à une unité maîtresse (57, 75) via au moins une première et une deuxième paire de conducteurs (1,3) ; l'appareil de mesure (61) étant dimensionné pour qu'il laisse circuler un courant de signal via la première paire de conducteurs (1) qui représente une valeur de mesure produite par l'appareil de mesure (61) et lequel appareil de mesure est alimenté via la deuxième paire de conducteurs (3) par un courant d'alimentation ; le courant d'alimentation et au moins une partie du courant de signal étant à disposition pour l'alimentation de l'appareil de mesure (61) et où une valeur du courant d'alimentation est supérieure ou égale à un courant de signal minimal, au cours du service normal, et inférieur ou égal à un courant de signal maximal.

26. Appareil de mesure (61) selon la revendication 25, **caractérisé en ce que** l'appareil de mesure comprend un capteur de mesure (29) pour la détection d'une grandeur de mesure physique, notamment d'une pression, d'un niveau de remplissage dans un récipient ou d'une quantité de flux par un tube.

27. Appareil de mesure (61) selon la revendication précédente, **caractérisé en ce que** le capteur de mesure (29) est alimenté par le courant d'alimentation circulant dans la deuxième paire de conducteurs (3).

28. Appareil de mesure (61) selon les revendications 25 à 27, **caractérisé en ce qu'**on a prévu pour chacune des deux paires de conducteurs (1,3) à chaque fois un limitateur de la tension de courant (15, 17).

29. Appareil de mesure (61) selon une des revendications 25 à 27, **caractérisé en ce qu'**à chaque paire de conducteurs (1,3) on a connecté du côté de l'entrée, un limitateur de la tension de courant (15, 17).

30. Appareil de mesure (61) selon une des revendications 25 à 29, **caractérisé en ce que** les deux paires de conducteurs (1,3) sont séparés l'un de l'autre de manière galvanique.

31. Appareil de mesure (61) selon une des revendications 25 à 29, **caractérisé en ce qu'**on a prévu un transmetteur (45) pour la séparation galvanique des deux paires de conducteurs (1,3).

32. Appareil de mesure (61) selon une des revendications 25 à 29, **caractérisé en ce qu'**on a prévu un optocoupleur pour la séparation galvanique des deux paires de conducteurs (1,3).

33. Appareil de mesure (61) selon une des revendications 25 à 32, **caractérisé en ce que** le courant de signal varie en fonction de la valeur de mesure, entre un courant de signal minimal et un courant de signal maximal.

34. Appareil de mesure (61) selon une des revendications 25 à 33, **caractérisé en ce que** le courant d'alimentation varie en fonction du besoin en énergie actuel de l'appareil de mesure (61).

35. Disposition de mesure selon une des revendications précédentes, **caractérisée en ce que** le courant d'alimentation varie en fonction du besoin en énergie de l'appareil de mesure (61), entre un courant d'alimentation minimal et un courant d'alimentation maximal.

36. Appareil de mesure (61) selon une des revendications 25 à 35, **caractérisé en ce que** l'appareil de mesure (61) présente un afficheur sur place (39) approprié, notamment pour l'affichage d'une valeur de mesure actuelle.

37. Appareil de mesure (61) selon une des revendications 25 à 36, **caractérisé en ce que** l'appareil de mesure (61) présente un champ de commande (41) approprié, notamment pour l'entrée des données.

38. Appareil de mesure (61) selon une des revendications 25 à 37, **caractérisé en ce que** l'appareil de mesure (61) présente une interface de programmation (43) appropriée, notamment pour la connexion d'un appareil commandé manuellement.

## Claims

1. A measuring arrangement which comprises a measuring instrument (61) and an overriding unit (57, 75) connected to the latter, wherein the measuring instrument (61) and the overriding unit (57, 75) are electrically connected to each other by way of a first pair of leads (1) and by way of a second pair of leads (3), and wherein the measuring arrangement is designed in such a way that during operation a signal current, which is a measure for a measurement value generated by the measuring instrument (61), flows by way of the first pair of leads (1), and a supply current flows by way of the second pair of leads (3), wherein the supply current and at least part of the signal current are available for supplying the measuring instrument (61), and wherein a value of the supply current in normal operation is larger than or equal to a minimum signal current and smaller than or equal to a maximum signal current.

2. A measuring arrangement according to Claim 1, **characterized in that** at least two measuring-transducer feed units (79) suitable for supplying two-wire measuring instruments are provided in the overriding unit (57, 75), and each of the two pairs of leads (1, 3) is electrically connected to one of the two measuring-transducer feed units (79) in each case.

3. A measuring arrangement according to Claim 1, **characterized in that** at least two measuring-transducer feed units (79) suitable for supplying two-wire measuring instruments are provided in the overriding unit (57, 75), and each of the two measuring-transducer feed units (79) is electrically connected to one of the two pairs of leads (1, 3) in each case.

4. A measuring arrangement according to any one of the preceding Claims, **characterized in that** the measuring instrument comprises a measuring pick-up (29) for detecting a physical measured variable, in particular a pressure, a filling level in a container or a through-flow quantity through a pipe.

5. A measuring arrangement according to the preceding Claim, **characterized in that** the measuring pick-up (29) is supplied with the supply current which flows in the second pair of leads (3).

6. A measuring arrangement according to any one of the preceding Claims, **characterized in that** a current / voltage limitation (15, 17) is provided in each case for each of the two pairs of leads (1, 3).

7. A measuring arrangement according to any one of the preceding Claims, **characterized in that** a current / voltage limitation (15, 17) is connected to each pair of leads (1, 3) on the input side.

8. A measuring arrangement according to any one of the preceding Claims, **characterized in that** the two pairs of leads (1, 3) are indirect-coupled to each other.

9. A measuring arrangement according to the preceding Claim, **characterized in that** the two pairs of leads (1, 3) are indirect-coupled to each other inside the measuring instrument (61).

10. A measuring arrangement according to any one of the preceding Claims, **characterized in that** a transmitter (45) is provided in the measuring instrument (61) for the indirect coupling of the two pairs of leads (1, 3).

11. A measuring arrangement according to any one of Claims 1 to 9, **characterized in that** opto-electronic couplers are provided in the measuring instrument (61) for the indirect coupling of the two pairs of leads (1, 3).

12. A measuring arrangement according to any one of the preceding Claims, **characterized in that** the signal current varies between 4 mA and 20 mA in a manner dependent upon the measurement value.

13. A measuring arrangement according to Claim 12, **characterized in that** a signal current which is lower than the minimum signal current signals a malfunction in the measuring arrangement.

14. A measuring arrangement according to Claim 12, **characterized in that** a signal current which is greater than the maximum signal current signals a malfunction in the measuring arrangement.

15. A measuring arrangement according to any one of the preceding Claims, **characterized in that** the supply current varies in a manner dependent upon a current energy requirement of the measuring instrument (61).

16. A measuring arrangement according to the preceding Claim, **characterized in that** the supply current varies between a minimum supply current and a maximum supply current in a manner dependent upon the energy requirement of the measuring instrument (61).

17. A measuring arrangement according to Claim 16, **characterized in that** a supply current which is lower than the minimum supply current signals a malfunction in the measuring arrangement.

18. A measuring arrangement according to Claim 16, **characterized in that** a supply current which is greater than the maximum supply current signals a malfunction in the measuring arrangement.

19. A measuring arrangement according to any one of the preceding Claims, **characterized in that** the overriding unit (57, 75) comprises a control and/or regulating unit (67, 77, 91), in particular a stored-program controller (SPC) and/or a personal computer (PC).

20. A measuring arrangement according to any one of the preceding Claims, **characterized in that** a bus line (89) for transmitting the measurement values generated by the measuring instrument (61) is provided in the overriding unit (57, 75).

21. A measuring arrangement according to the preceding Claim, **characterized in that** a bus connexion (87) for connecting the measuring instrument (61) to the bus line (89) is provided in the overriding unit (57, 75).

22. A measuring arrangement according to any one of the preceding Claims, **characterized in that** the measuring instrument (61) has a local display (39) which, in particular, is suitable for displaying a current measurement value.

23. A measuring arrangement according to any one of the preceding Claims, **characterized in that** the measuring instrument (61) has a control panel (41) which, in particular, is suitable for inputting data.

24. A measuring arrangement according to any one of the preceding Claims, **characterized in that** the measuring instrument (61) has a programming interface (43) which, in particular, is suitable for the attachment of a manual control appliance.

25. A measuring instrument (61) for attachment to an overriding unit (57, 75) by way of at least one first and one second pair of leads (1, 3), wherein the measuring instrument (61) is designed in such a way that it allows a signal current, which represents a measurement value generated by the measuring instrument (61), to flow by way of the first pair of leads (1), and is supplied with a supply current by way of the second pair of leads (3), wherein the supply current and at least part of the signal current are available for supplying the measuring instrument (61), and wherein a value of the supply current in normal operation is larger than or equal to a minimum signal current and smaller than or equal to a maximum signal current.

26. A measuring instrument (61) according to Claim 25, **characterized in that** the measuring instrument comprises a measuring pick-up (29) for detecting a physical measured variable, in particular a pressure, a filling level in a container or a through-flow quantity through a pipe.

27. A measuring instrument (61) according to the preceding Claim, **characterized in that** the measuring pick-up (29) is supplied with the supply current which flows in the second pair of leads (3).

28. A measuring instrument (61) according to any one of Claims 25 to 27, **characterized in that** a current / voltage limitation (15, 17) is provided in each case for each of the two pairs of leads (1, 3).

29. A measuring instrument (61) according to any one of Claims 25 to 27, **characterized in that** a current / voltage limitation (15, 17) is connected to each pair of leads (1, 3) on the input side.

30. A measuring instrument (61) according to any one of Claims 25 to 29, **characterized in that** the two pairs of leads (1, 3) are indirect-coupled to each other.

31. A measuring instrument (61) according to any one of Claims 25 to 29, **characterized in that** a transmitter (45) is provided for the indirect coupling of the two pairs of leads (1,3).

32. A measuring instrument (61) according to any one of Claims 25 to 29, **characterized in that** opto-electronic couplers are provided for the indirect coupling of the two pairs of leads (1, 3).

33. A measuring instrument (61) according to any one of Claims 25 to 32, **characterized in that** the signal current varies between a minimum signal current and a maximum signal current in a manner dependent upon the measurement value.

34. A measuring instrument (61) according to any one of Claims 25 to 33, **characterized in that** the supply current varies in a manner dependent upon a current energy requirement of the measuring instrument (61).

35. A measuring arrangement according to the preceding Claim, **characterized in that** the supply current varies between a minimum supply current and a maximum supply current in a manner dependent upon the energy requirement of the measuring instrument (61).

36. A measuring instrument (61) according to any one of Claims 25 to 35, **characterized in that** the measuring instrument (61) has a local display (39) which, in particular, is suitable for displaying a current measurement value.

37. A measuring instrument (61) according to any one of Claims 25 to 36, **characterized in that** the measuring instrument (61) has a control panel (41) which, in particular, is suitable for inputting data.

38. A measuring instrument (61) according to any one of Claims 25 to 37, **characterized in that** the measuring instrument (61) has a programming interface (43) which, in particular, is suitable for the attachment of a manual control appliance.
